# EUROPEAN PATENT APPLICATION

(11) **EP 4 737 954 A1**
(43) Date of publication of application: **06.05.2026**
(21) Application number: 24831717.4
(22) Date of filing: 14.06.2024
(51) Int. Cl.: G02B 1/18, G02B 1/14, G02B 1/115, G02C 7/02

(54) **MULTILAYER BODY AND SPECTACLE LENS**

(30) Priority: 30.06.2023 JP 2023108236
(71) Applicant: Nikon-Essilor Co., Ltd., Tokyo 130-0026 (JP)
(72) Inventor: IGAMI, Yuka, Tokyo 130-0026 (JP); WAKIYASU, Hideyuki, Tokyo 130-0026 (JP); ISHIMURA, Kei, Tokyo 130-0026 (JP)
(74) Representative: Hoffmann Eitle
(86) International application number: PCT/JP2024/021653
(87) International publication number: WO 2025/004852

(57) **Abstract**

An object of the present disclosure is to provide a laminate that is excellent in scratch resistance and also in appearance characteristics. The laminate of the present disclosure is a laminate including a substrate, an antireflection layer, an intermediate layer, and a water-repellent layer in this order. The intermediate layer is a layer formed using an intermediate layer-forming composition, and the intermediate layer-forming composition contains: at least one compound X selected from the group consisting of a compound represented by formula (X1), a hydrolysate of the compound represented by the formula (X1), and a hydrolysis condensate of the compound represented by the formula (X1); and a compound Y which is a compound different from the compound X, has at least one of an amino group or an amine skeleton, and has a silicon atom.

## Description

### TECHNICAL FIELD

The present disclosure relates to a laminate and a spectacle lens.

### BACKGROUND ART

Patent Literature 1 discloses a hard coat film in which a hard coat layer (X), a primer layer (Y), and a surface layer (Z) are laminated in this order on at least one surface of a substrate, wherein the surface layer (Z) has a water contact angle of 110° or more.

### CITATION LIST

### PATENT LITERATURE

Patent Literature 1: JP 2015-120253 A

### SUMMARY OF INVENTION

The present disclosure relates to a laminate including a lens substrate, an antireflection layer, an intermediate layer, and a water-repellent layer in this order, wherein the intermediate layer is a layer formed using an intermediate layer-forming composition, and the intermediate layer-forming composition contains at least one compound X selected from the group consisting of a compound represented by formula (X1) described later, a hydrolysate of the compound represented by the formula (X1), and a hydrolysis condensate of the compound represented by the formula (X1), and a compound Y which is a compound different from the compound X, has at least one of an amino group or an amine skeleton, and has a silicon atom.

### DESCRIPTION OF EMBODIMENTS

Hereinafter, a laminate of the present disclosure will be described in detail.

The laminate of the present disclosure is excellent in scratch resistance and also in appearance characteristics.

In the present description, "... to ..." means that numerical values described before and after "to" are included as a lower limit value and an upper limit value.

In the present description, the "solid content" of a composition means a component that forms a layer formed using the composition, and when the composition contains a solvent (for example, an organic solvent, water, and the like), the solid content refers to all components excluding the solvent. A liquid component is also regarded as the solid content as long as it is a component that forms the layer formed using the composition.

The bonding direction of a divalent group described in the present description is not limited unless otherwise specified. For example, when Y in a compound represented by the formula "X-Y-Z" is -COO-, Y may be -CO-O- or -O-CO-. The compound may be "X-CO-O-Z" or "X-O-CO-Z".

### [Laminate]

The laminate includes a substrate, an antireflection layer, an intermediate layer, and a water-repellent layer in this order.

The laminate may have the antireflection layer, the intermediate layer, the water-repellent layer, and the like on one surface of the substrate, or may have the antireflection layer, the intermediate layer, the water-repellent layer, and the like on each surface of the substrate.

The intermediate layer is preferably disposed adjacent to the antireflection layer and the water-repellent layer. In other words, the laminate preferably includes the substrate, the antireflection layer, the intermediate layer disposed adjacent to the antireflection layer, and the water-repellent layer disposed adjacent to the intermediate layer in this order.

### <Substrate>

The laminate includes the substrate.

Examples of the substrate include a substrate composed of a material selected from an organic material and an inorganic material, and an organic material substrate is preferable.

Examples of the organic material include an acrylic acid ester resin, a methacrylic acid ester resin, a thiourethane resin, an allyl resin, an episulfide resin, polycarbonate, a urethane resin, polyester, polystyrene, polyethersulfone, poly-4-methyl-pentene-1, and a diethylene glycol bisallyl carbonate resin (CR-39), and a thiourethane resin, an episulfide resin, or a diethylene glycol bisallyl carbonate resin is preferable.

The thiourethane resin is a resin obtained by polymerizing a polyisocyanate compound and a polythiol compound.

The polyisocyanate compound is preferably m-xylylene diisocyanate, a mixture of 2,5-bis(isocyanatomethyl)-bicyclo[2,2,1]heptane and 2,6-bis(isocyanatomethyl)-bicyclo[2,2,1]-heptane, isophorone diisocyanate, hexamethylene diisocyanate, or tolylene diisocyanate.

The polythiol compound is preferably pentaerythritol tetrakis(3-mercaptopropionate), 1,2-bis[(2-mercaptoethyl)thio]-3-mercaptopropane, or a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane.

The episulfide resin is a resin obtained by the ring-opening polymerization of a monomer having an episulfide group (epithio group) or a mixed monomer containing the monomer.

The monomer having an episulfide group is preferably bis(2,3-epithiopropyl)sulfide or bis(2,3-epithiopropyl)disulfide.

As the substrate, lens substrates such as an organic material lens substrate and an inorganic material lens substrate are also preferable.

Examples of the lens substrates include a finish lens in which a convex surface and a concave surface are optically finished and molded according to a desired power, a semi-finished lens in which only a convex surface is finished as an optical surface (for example, a spherical surface, a rotationally symmetric aspherical surface, and a progressive surface), and a lens obtained by processing and polishing a concave surface of the semi-finished lens according to a wearer's prescription.

The thickness of the substrate is preferably 0.8 to 30.0 mm, and more preferably 1.0 to 10.0 mm from the viewpoint of handleability.

The refractive index of the substrate is preferably 1.50 or more, more preferably 1.60 to 1.80, and still more preferably 1.60 to 1.74.

### <Antireflection Layer>

The laminate includes the antireflection layer.

The antireflection layer may have a single layer structure or a multilayer structure.

The antireflection layer is preferably an inorganic antireflection layer. The inorganic antireflection layer means an antireflection layer composed of an inorganic compound.

The antireflection layer having a multilayer structure may have a structure in which low refractive index layers and high refractive index layers are alternately laminated.

Examples of a material constituting the high refractive index layer include oxides of titanium, zirconium, aluminum, niobium, tantalum, and lanthanum. Examples of a material constituting the low refractive index layer include silicon oxide.

Examples of a method for forming the antireflection layer include dry methods such as a vacuum vapor deposition method, a sputtering method, an ion plating method, an ion beam assist method, and a CVD method.

The thickness of the antireflection layer is preferably 100 to 10,000 nm, and more preferably 300 to 700 nm.

### <Intermediate Layer>

The laminate includes the intermediate layer.

The intermediate layer is a layer formed using an intermediate layer-forming composition described later.

The intermediate layer functions as a primer layer of the water-repellent layer, and the intermediate layer makes the laminate more excellent in scratch resistance.

The intermediate layer preferably contains various components other than an organic solvent contained in the intermediate layer-forming composition, or contains cured products thereof.

Examples of a method for forming the intermediate layer include a method in which an intermediate layer-forming composition is applied onto a desired member to form a coating film, and the coating film is subjected to a curing treatment (for example, drying treatment) as necessary to form the intermediate layer. In other words, the intermediate layer is preferably a layer obtained by applying the intermediate layer-forming composition onto a desired member to form a coating film and subjecting the coating film to a curing treatment.

Examples of a method for applying the intermediate layer-forming composition include a dipping coating method, a spin coating method, a spray coating method, an inkjet coating method, and a flow coating method.

The thickness of the intermediate layer is preferably 0.5 to 50 nm, and more preferably 1 to 30 nm.

Hereinafter, various components that may be contained in the intermediate layer-forming composition will be described in detail.

### (Intermediate Layer-Forming Composition)

The intermediate layer-forming composition contains at least one compound X selected from the group consisting of a compound represented by the formula (X1), a hydrolysate of the compound represented by the formula (X1), and a hydrolysis condensate of the compound represented by the formula (X1), and a compound Y which is a compound different from the compound X, has at least one of an amino group or an amine skeleton, and has a silicon atom. That is, the intermediate layer-forming composition contains the compound X and the compound Y.

### -Compound X-

The compound X is at least one compound selected from the group consisting of the compound represented by the formula (X1), a hydrolysate of the compound represented by the formula (X1), and a hydrolysis condensate of the compound represented by the formula (X1).

The hydrolysate of the compound represented by the formula (X1) means a compound obtained by hydrolyzing hydrolyzable groups in the compound represented by the formula (X1). The hydrolysate may be a product in which all of the hydrolyzable groups are hydrolyzed (complete hydrolysate) or a product in which some of the hydrolyzable groups are hydrolyzed (partial hydrolysate). That is, the hydrolysate may be any of the complete hydrolysate, the partial hydrolysate, and a mixture thereof.

The hydrolysis condensate of the compound represented by the formula (X1) means a compound obtained by hydrolyzing hydrolyzable groups in the compound represented by the formula (X1) and condensing the obtained hydrolysate. The hydrolysis condensate may be a product in which all of the hydrolyzable groups are hydrolyzed and all of the hydrolysates are condensed (complete hydrolysis condensate), or a product in which some of the hydrolyzable groups are hydrolyzed and some of the hydrolysates are condensed (partial hydrolysis condensate). That is, the hydrolysis condensate may be any of the complete hydrolysis condensate, the partial hydrolysis condensate, and a mixture thereof.

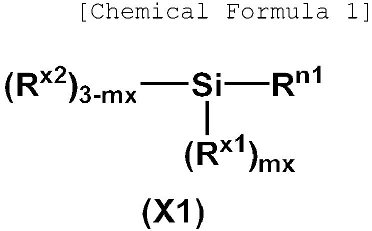

In the formula (X1), Rⁿ¹ represents an alkyl group having an amino group and optionally having -NH-. R^{x1} represents a hydroxyl group or a hydrolyzable group. R^{x2} represents a hydrocarbon group. mx represents an integer of 1 to 3.

When a plurality of R^{x1}'s are present, R^{x1}'s may be the same or different from each other. When a plurality of R^{x2}'s are present, R^{x2}'s may be the same or different from each other.

In the formula (X1), Rⁿ¹ represents an alkyl group having an amino group and optionally having -NH-.

The alkyl group may be linear, branched, or cyclic, and is preferably linear.

The number of carbon atoms in the alkyl group is preferably 1 to 20, more preferably 1 to 10, and still more preferably 1 to 5.

The number of amino groups (-NH₂) of the alkyl group is preferably 1 to 5, more preferably 1 to 3, and still more preferably 1.

The number of -NH-'s that may be contained in the alkyl group is preferably 0 to 5, more preferably 0 to 3, and still more preferably 0 or 1.

The total number of the amino groups and the -NH-'s of the alkyl group is preferably 1 to 5, more preferably 1 to 3, and still more preferably 1 or 2.

In the formula (X1), R^{x1} represents a hydroxyl group or a hydrolyzable group.

Examples of the hydrolyzable group include an alkoxy group, a halogen atom, a cyano group, an acetoxy group, and an isocyanate group, and an alkoxy group or a halogen atom is preferable, and an alkoxy group is more preferable.

The alkoxy group is preferably an alkoxy group having 1 to 4 carbon atoms, and more preferably a methoxy group or an ethoxy group.

Examples of the halogen atom include a fluorine atom, a chlorine atom, a bromine atom, and an iodine atom, and a chlorine atom is preferable.

In the formula (X1), R^{x2} represents a hydrocarbon group.

The hydrocarbon group may be linear, branched, or cyclic.

The number of carbon atoms in the hydrocarbon group is preferably 1 to 20, more preferably 1 to 10, and still more preferably 1 to 5.

The hydrocarbon group is preferably an alkyl group.

In the formula (X1), mx represents an integer of 1 to 3.

mx is preferably 2 or 3, and more preferably 3.

The compound represented by the formula (X1) is preferably a compound represented by the formula (X2).

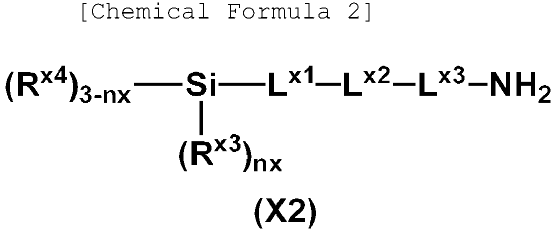

In the formula (X2), L^{x1} and L^{x3} each independently represent an alkylene group having 1 to 5 carbon atoms. L^{x2} represents a single bond or -NH-. R^{×3} represents a hydroxyl group or a hydrolyzable group. R^{x4} represents an alkyl group having 1 to 5 carbon atoms. nx represents an integer of 1 to 3.

Note that R^{x3}, R^{x4}, and nx in the formula (X2) have the same definitions as R^{x1}, R^{x2}, and mx in the formula (X1), respectively, and preferred examples thereof are also the same.

When a plurality of R^{x3}'s are present, R^{x3}'s may be the same or different from each other. When a plurality of R^{x4}'s are present, R^{x4}'s may be the same or different from each other.

In the formula (X2), L^{x1} and L^{x3} each independently represent an alkylene group having 1 to 5 carbon atoms.

The alkylene group may be linear, branched, or cyclic, and is preferably linear.

The number of carbon atoms in the alkylene group is 1 to 5, and preferably 1 to 3.

Examples of the compound X include N-2-(aminoethyl)-3-aminopropyltrimethoxysilane and 3-aminopropyltrimethoxysilane, and hydrolysates and hydrolysis condensates thereof.

### -Compound Y-

The compound Y is a compound different from the compound X, has at least one of an amino group or an amine skeleton, and has a silicon atom. That is, a compound corresponding to the compound X is not included in the compound Y.

The compound Y preferably has an amine skeleton (-NR^{N}-), and more preferably has no amino group (-NH₂) and has an amine skeleton (-NR^{N}-).

The number of amino groups (-NH₂) that may be contained in the compound Y is preferably 0 to 5, more preferably 0 to 3, and still more preferably 0.

The number of amine skeletons (-NR^{N}-) that may be contained in the compound Y is preferably 1 to 5, more preferably 1 to 3, and still more preferably 1 or 2. R^{N} represents a hydrogen atom or a substituent. The substituent is preferably an alkyl group.

The total number of the amino groups (-NH₂) and the amine skeletons (-NR^{N}-) of the compound Y is preferably 1 to 5, more preferably 1 to 3, and still more preferably 2.

The number of silicon atoms of the compound Y is 1 or more, preferably 1 to 5, and more preferably 1 to 3.

The compound Y preferably has a group represented by the formula (S). The number of groups represented by the formula (S) that may be contained in the compound Y is preferably 1 to 5, and more preferably 1 to 3.

-Si(R^{s1})ₙₛ(R^{s2})₃₋ₙₛ (S)

In the formula (S), R^{s1} represents a hydroxyl group or a hydrolyzable group. R^{s2} represents a hydrocarbon group. ns represents an integer of 1 to 3.

R^{s1}, R^{s2}, and ns in the formula (S) have the same definitions as R^{x1}, R^{x2}, and mx in the formula (X1), respectively, and preferred examples thereof are also the same.

When a plurality of R^{s1}'s are present, R^{s1}'s may be the same or different from each other. When a plurality of R^{s2}'s are present, R^{s2}'s may be the same or different from each other.

The compound Y preferably has at least one selected from the group consisting of a monovalent reactive group, an alkylene group optionally having a fluorine atom, - Si(R^{s})₂-, and a sulfide bond (-S-).

Examples of the monovalent reactive group include a vinyl group, an α-methylvinyl group, a styryl group, a methacryloyl group, an acryloyl group, an isocyanate group, an isocyanurate group, an epoxy group, and a mercapto group. The number of reactive groups that may be contained in the compound Y may be 1 or 2 or more. When the compound Y has the monovalent reactive group, the compound Y preferably has the monovalent reactive group at a terminal of the main chain.

The alkylene group optionally having a fluorine atom may be linear, branched, or cyclic, and is preferably linear. The number of carbon atoms in the alkylene group is preferably 1 to 30, and more preferably 1 to 10. When the alkylene group has a fluorine atom, the number of fluorine atoms of the alkylene group is preferably 1 to 10, and more preferably 1 to 5. The alkylene group having a fluorine atom(s) refers to an alkylene group in which one or more hydrogen atoms in the alkylene group are substituted with a fluorine atom(s). All hydrogen atoms of the alkylene group may be substituted with fluorine atoms, or some hydrogen atoms may be substituted with fluorine atoms.

R^{s} in -Si(R^{s})₂- represents a hydrogen atom, a fluorine atom, or an alkyl group optionally having a fluorine atom. The alkyl group optionally having a fluorine atom may be linear, branched, or cyclic, and is preferably linear. The number of carbon atoms in the alkyl group is preferably 1 to 30, and more preferably 1 to 10. When the alkyl group has a fluorine atom, the number of fluorine atoms of the alkyl group is preferably 1 to 10, and more preferably 1 to 5. All hydrogen atoms of the alkyl group may be substituted with fluorine atoms, or some hydrogen atoms may be substituted with fluorine atoms. A plurality of R^{s}'s may be the same or different from each other.

The compound Y preferably contains at least one selected from the group consisting of a compound represented by the formula (Y1), a hydrolysate of the compound represented by the formula (Y1), and a hydrolysis condensate of the compound represented by the formula (Y1), and more preferably contains at least one selected from the group consisting of a compound represented by the formula (Y2), a hydrolysate of the compound represented by the formula (Y2), and a hydrolysis condensate of the compound represented by the formula (Y2).

The hydrolysate and the hydrolysis condensate are as described above for the compound X.

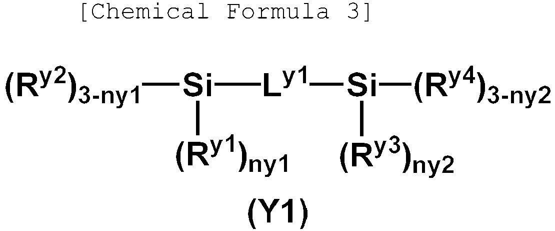

In the formula (Y1), R^{y1} and R^{y3} each independently represent a hydroxyl group or a hydrolyzable group. R^{y2} and R^{y4} each independently represent a hydrocarbon group. ny1 and ny2 each independently represent an integer of 1 to 3. L^{y1} represents a divalent linking group having at least - NR^{L1}-, and the divalent linking group may further have a group selected from the group consisting of -NR^{L1}-, - C(R^{L2})(R^{L3})-, and -Si(R^{L4})(R^{L5})-. R^{L1} represents a hydrogen atom or an alkyl group. R^{L2} to R^{L5} each independently represent a hydrogen atom, a fluorine atom, or an alkyl group optionally having a fluorine atom.

Note that R^{y1} and R^{y3} in the formula (Y1) have the same definition as R^{x1} in the formula (X1), and preferred examples thereof are also the same. R^{y2} and R^{y4} in the formula (Y1) have the same definition as R^{x2} in the formula (X1), and preferred examples thereof are also the same. ny1 and ny2 in the formula (Y1) have the same definition as mx in the formula (X1), and preferred examples thereof are also the same.

When a plurality of R^{y1}'s are present, R^{y1}'s may be the same or different from each other. When a plurality of R^{y2}'s are present, R^{y2}'s may be the same or different from each other. When a plurality of R^{y3}'s are present, R^{y3}'s may be the same or different from each other. When a plurality of R^{y4}'s are present, R^{y4}'s may be the same or different from each other. When a plurality of R^{L1}'s are present, R^{L1}'s may be the same or different from each other. When a plurality of R^{L2}'s are present, R^{L2}'s may be the same or different from each other. When a plurality of R^{L3}'s are present, R^{L3}'s may be the same or different from each other. When a plurality of R^{L4}'s are present, R^{L4}'s may be the same or different from each other. When a plurality of R^{L5}'s are present, R^{L5}'s may be the same or different from each other.

In the formula (Y1), L^{y1} represents a divalent linking group having at least -NR^{L1}-, and the divalent linking group may further have a group selected from the group consisting of -NR^{L1}-, -C(R^{L2})(R^{L3})-, and -Si (R^{L4})(R^{L5})-. R^{L1} represents a hydrogen atom or an alkyl group. R^{L2} to R^{L5} each independently represent a hydrogen atom, a fluorine atom, or an alkyl group optionally having a fluorine atom. The alkyl group represented by R^{L1} may be linear, branched, or cyclic, and is preferably linear. The number of carbon atoms in the alkyl group is preferably 1 to 5, and more preferably 1 to 3. R^{L1} is preferably a hydrogen atom.

The alkyl group optionally having a fluorine atom, represented by any of R^{L2} to R^{L5}, has the same definition as the alkyl group optionally having a fluorine atom, represented by R^{s} in -Si(R^{s})₂-, and preferred examples thereof are also the same.

L^{y1} may be a divalent linking group formed by combining -NR^{L1}- and at least one group selected from the group consisting of -C(R^{L2})(R^{L3})- and -Si (R^{L4})(R^{L5})- as long as it is a divalent linking group having -NR^{L1}-.

L^{y1} is preferably a divalent linking group composed of -NR^{L1}- and -C(R^{L2})(R^{L3})-, and more preferably a divalent linking group composed of at least two (preferably 2 to 3) -NR^{L1}-'s and at least two (preferably 2 to 9) - C(R^{L2})(R^{L3})-'s.

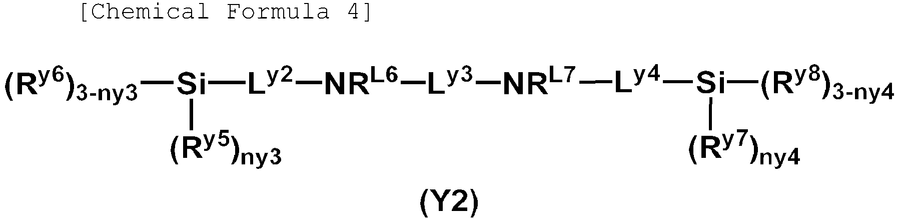

In the formula (Y2), R^{y5} and R^{y7} each independently represent a hydroxyl group or a hydrolyzable group. R^{y6} and R^{y8} each independently represent a hydrocarbon group. ny3 and ny4 each independently represent an integer of 1 to 3. R^{L6} and R^{L7} each independently represent a hydrogen atom or an alkyl group. L^{y2} to L^{y4} each independently represent an alkylene group optionally having a fluorine atom.

Note that R^{y5} and R^{y7} in the formula (Y2) have the same definition as R^{x1} in the formula (X1), and preferred examples thereof are also the same. R^{y6} and R^{y8} in the formula (Y2) have the same definition as R^{x2} in the formula (X1), and preferred examples thereof are also the same. ny3 and ny4 in the formula (Y2) have the same definition as mx in the formula (X1), and preferred examples thereof are also the same. R^{L6} and R^{L7} in the formula (Y2) have the same definition as R^{L1} in the formula (Y1), and preferred examples thereof are also the same.

When a plurality of R^{y5}'s are present, R^{y5}'s may be the same or different from each other. When a plurality of R^{y6}'s are present, R^{y6}'s may be the same or different from each other. When a plurality of R^{y7}'s are present, R^{y7}'s may be the same or different from each other. When a plurality of R^{y8}'s are present, R^{y8}'s may be the same or different from each other.

The alkylene group optionally having a fluorine atom, represented by any of L^{y2} to L^{y4}, may be linear, branched, or cyclic, and is preferably linear. The number of carbon atoms in the alkylene group is preferably 1 to 30, and more preferably 1 to 10. When the alkylene group has a fluorine atom, the number of fluorine atoms of the alkylene group is preferably 1 to 10, and more preferably 1 to 5.

The alkylene group is also preferably an alkyl group having no fluorine atom.

Examples of the compound Y include N,N'-bis[3-(trimethoxysilyl)propyl]-1,2-ethanediamine (X12-5263HP, manufactured by Shin-Etsu Chemical Co., Ltd.).

The content of the compound X in the intermediate layer-forming composition is preferably 1.0 to 95.0 mass%, more preferably 10.0 to 90.0 mass%, and still more preferably 32.0 to 88.0 mass%, with respect to the total content of the compound X and the compound Y.

The content of the compound X is preferably 10.0 to 90.0 mass%, more preferably 32.0 to 88.0 mass%, and still more preferably 40.0 to 80.0 mass%, with respect to the total solid content of the intermediate layer-forming composition.

The content of the compound Y is preferably 10.0 to 90.0 mass%, more preferably 12.0 to 68.0 mass%, and still more preferably 20.0 to 60.0 mass%, with respect to the total solid content of the intermediate layer-forming composition.

### -Organic Solvent-

The intermediate layer-forming composition may contain an organic solvent.

Examples of the organic solvent include an alcohol-based solvent, a ketone-based solvent, an ether-based solvent, an ester-based solvent, a hydrocarbon-based solvent, a halogenated hydrocarbon-based solvent, an amide-based solvent, a sulfone-based solvent, and a sulfoxide-based solvent.

The organic solvents may be used singly or in combination of two or more kinds thereof.

### <Water-Repellent Layer>

The laminate includes the water-repellent layer.

The water-repellent layer reduces the surface energy of the laminate, thereby improving the anti-staining properties and slippage of the laminate, and also improving the abrasion resistance of the laminate.

The water-repellent layer is preferably a layer formed using a water-repellent layer-forming composition.

The water-repellent layer preferably contains various components, or cured products thereof, other than an organic solvent contained in the water-repellent layer-forming composition.

Examples of a method for forming the water-repellent layer include a method in which a water-repellent layer-forming composition is applied onto a desired member to form a coating film, and the coating film is subjected to a curing treatment (for example, drying treatment) as necessary to form the water-repellent layer. In other words, the water-repellent layer is preferably a layer obtained by applying the water-repellent layer-forming composition onto a desired member to form a coating film, and subjecting the coating film to a curing treatment.

Examples of a method for applying the water-repellent layer-forming composition include application of the intermediate layer-forming composition described above.

The thickness of the water-repellent layer is preferably 0.5 to 50 nm, and more preferably 1 to 10 nm.

Hereinafter, various components that may be contained in the water-repellent layer-forming composition will be described in detail.

### (Water-Repellent Layer-Forming Composition)

The water-repellent layer-forming composition preferably contains an organosilicon compound having a fluorine atom and a silicon atom, and more preferably contains at least one selected from the group consisting of an organosilicon compound A having at least one selected from the group consisting of a perfluorooxyalkylene group and a poly(perfluorooxyalkylene) chain and having a silicon atom, and an organosilicon compound B having neither a perfluorooxyalkylene group nor a poly(perfluorooxyalkylene) chain but having a silicon atom.

### -Organosilicon Compound A-

The organosilicon compound A is a compound having at least one selected from the group consisting of a perfluorooxyalkylene group and a poly(perfluorooxyalkylene) chain and having a silicon atom.

The perfluorooxyalkylene group may be linear, branched, or cyclic.

The number of carbon atoms in the perfluorooxyalkylene group is preferably 1 to 20, more preferably 1 to 10, and still more preferably 1 to 3.

The perfluorooxyalkylene group is preferably -ORf-. Rf represents a perfluoroalkylene group. The perfluoroalkylene group may be linear, branched, or cyclic. The number of carbon atoms in the perfluoroalkylene group is preferably 1 to 20, more preferably 1 to 10, and still more preferably 1 to 3.

The poly(perfluorooxyalkylene) chain may be linear, branched, or cyclic.

The number of carbon atoms in the poly(perfluorooxyalkylene) chain is preferably 5 or more, more preferably 30 or more, and still more preferably 50 or more. The upper limit thereof is preferably 1,000 or less, and more preferably 500 or less.

The poly(perfluorooxyalkylene) chain is preferably a group represented by the formula (F).

-(ORf)_{mf}- (F)

In the formula (F), Rf represents a perfluoroalkylene group. mf represents a number of 2 or more.

Rf has the same definition as the perfluoroalkylene group constituting the perfluorooxyalkylene group that may be contained in the organosilicon compound, and preferred examples thereof are also the same.

mf is a number of 2 or more, preferably 10 or more, and more preferably 20 or more. The upper limit thereof is preferably a number of 1,000 or less, more preferably 500 or less, and still more preferably 100 or less.

Examples of the poly(perfluorooxyalkylene) chain include -(OCF₂)_{mf}-, -(OCF₂CF₂)_{mf}-, -(OCF₂CF₂CF₂)_{mf}-, - (OCF₂CF(CF₃))_{mf}-, -(OCF₂CF₂CF₂CF₂)_{mf}-, -(OCF₂CF₂CF₂CF₂CF₂CF₂)_{mf}-, and -(OC(CF₃)₂)_{mf}-, and -(OCF₂)_{mf}-, -(OCF₂CF₂)_{mf}-, or - (OCF₂CF₂CF₂)_{mf}- is preferable.

The number of silicon atoms of the organosilicon compound A is 1 or more, preferably 1 to 20, and more preferably 1 to 10.

The organosilicon compound A preferably has a group represented by the formula (S) that may be contained in the compound Y described above. The number of groups represented by the formula (S) that may be contained in the organosilicon compound A is preferably 1 to 20, and more preferably 1 to 10.

The organosilicon compound A preferably further has a perfluoroalkyl group.

The perfluoroalkyl group may be linear, branched, or cyclic.

The number of carbon atoms in the perfluoroalkyl group is preferably 1 to 20, more preferably 1 to 10, still more preferably 2 to 8, and particularly preferably 2 to 5.

The perfluoroalkyl group is preferably CF₃-(CF₂)_{nf}-. nf represents a number of 0 to 10, and a number of 1 to 4 is preferable.

The organosilicon compound A preferably contains at least one selected from the group consisting of a compound represented by the formula (A1), a hydrolysate of the compound represented by the formula (A1), and a hydrolysis condensate of the compound represented by the formula (A1), and more preferably contains at least one selected from the group consisting of a compound represented by the formula (A2), a hydrolysate of the compound represented by the formula (A2), a hydrolysis condensate of the compound represented by the formula (A2), a compound represented by the formula (A3), a hydrolysate of the compound represented by the formula (A3), and a hydrolysis condensate of the compound represented by the formula (A3).

The hydrolysate and the hydrolysis condensate are as described above for the compound X.

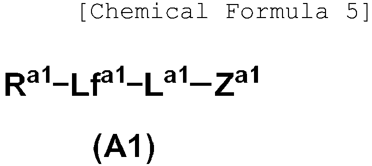

In the formula (A1), R^{a1} represents a hydrogen atom or a substituent. Lf^{a1} represents a perfluorooxyalkylene group or a poly (perfluorooxyalkylene) chain. L^{a1} represents a single bond or a divalent linking group other than the poly (perfluorooxyalkylene) chain. Z^{a1} represents a group represented by the formula (Z1) or a group having a repeating unit represented by the formula (Z2).

Lf^{a1} in the formula (A1) has the same definition as the perfluorooxyalkylene group or the poly(perfluorooxyalkylene) chain of the organosilicon compound A, and preferred examples thereof are also the same.

In the formula (A1), R^{a1} represents a hydrogen atom or a substituent.

As the substituent, a monovalent substituent having at least one selected from the group consisting of -O-, - NR^{T1}-, -C(R^{T2})(R^{T3})-, and -Si(R^{T4})(R^{T5})- is preferable, and a monovalent substituent having at least one selected from the group consisting of -O-, -C(R^{T2})(R^{T3})-, and - Si(R^{T4})(R^{T5})- is more preferable. R^{T1} represents a hydrogen atom or an alkyl group. R^{T2} to R^{T5} each independently represent a hydrogen atom, a fluorine atom, or an alkyl group optionally having a fluorine atom. R^{T1} to R^{T5} have the same definitions as R^{L1} to R^{L5} in the formula (Y1), respectively, and preferred examples thereof are also the same.

The substituent is preferably a substituent having a group represented by the formula (Z1) or an alkyl group optionally having a fluorine atom, and more preferably a substituent having a group represented by the formula (Z1) or a perfluoroalkyl group.

Examples of the alkyl group optionally having a fluorine atom include an alkyl group optionally having a fluorine atom as represented by R^{s}.

The perfluoroalkyl group may be linear, branched, or cyclic.

The number of carbon atoms in the perfluoroalkyl group is preferably 1 to 20, more preferably 1 to 10, still more preferably 2 to 8, and particularly preferably 2 to 5.

The perfluoroalkyl group is preferably CF₃-(CF₂)_{nf}-. nf represents a number of 0 to 10, and a number of 1 to 4 is preferable.

In the formula (A1), L^{a1} represents a single bond or a divalent linking group other than a poly(perfluorooxyalkylene) chain.

The divalent linking group other than a poly(perfluorooxyalkylene) chain is preferably a divalent linking group other than a poly(perfluorooxyalkylene) chain and having at least one selected from the group consisting of -O-, -COO-, -NR^{T1}-, -C (R^{T2})(R^{T3})-, and -Si(R^{T4})(R^{T5})-. R^{T1} to R^{T5} are as described above.

In particular, the divalent linking group other than a poly(perfluorooxyalkylene) chain is preferably a divalent linking group constituted of at least one selected from the group consisting of -O- and -CH₂-, or a perfluorooxyalkylene group. The perfluorooxyalkylene group has the same definition as the perfluorooxyalkylene group that may be contained in the organosilicon compound A, and preferred examples thereof are also the same.

In the formula (A1), Z^{a1} represents a group represented by the formula (Z1) or a group having a repeating unit represented by the formula (Z2).

Z^{a1} is preferably a group having a repeating unit represented by the formula (Z2).

When Z^{a1} is a group having a repeating unit represented by the formula (Z2), a group represented by R^{a1}-Lf^{a1}-L^{a1}- is preferably located at a terminal of a polymer chain having a repeating unit represented by the formula (Z2).

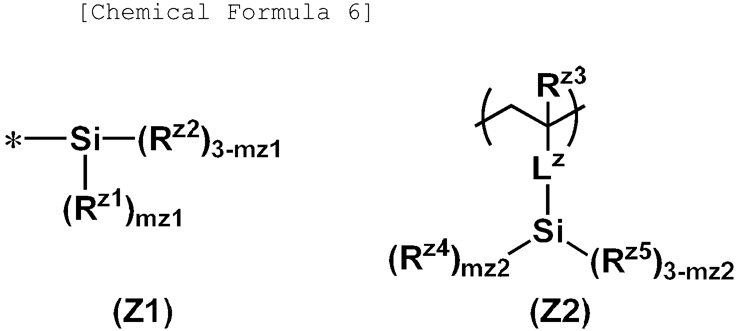

In the formula (Z1), * represents a bonding position. R^{z1} represents a hydroxyl group or a hydrolyzable group. R^{z2} represents a hydrocarbon group. mz1 represents an integer of 1 to 3.

In the formula (Z2), R^{z3} represents a hydrogen atom or a methyl group. R^{z4} represents a hydroxyl group or a hydrolyzable group. R^{z5} represents a hydrocarbon group. L^{z} represents a single bond or a divalent linking group. mz2 represents an integer of 1 to 3.

Note that R^{z1}, R^{z2}, and mz1 in the formula (Y1) have the same definitions as R^{x1}, R^{x2}, and mx in the formula (X1), respectively, and preferred examples thereof are also the same. R^{z4}, R^{z5}, and mz2 in the formula (Y2) have the same definitions as R^{x1}, R^{x2}, and mx in the formula (X1), respectively, and preferred examples thereof are also the same.

When a plurality of R^{z1}'s are present, R^{z1}'s may be the same or different from each other. When a plurality of R^{z2}'s are present, R^{z2}'s may be the same or different from each other. When a plurality of R^{z4}'s are present, R^{z4'}s may be the same or different from each other. When a plurality of R^{z5}'s are present, R^{z5}'s may be the same or different from each other.

R^{z3} is preferably a hydrogen atom.

In the formula (Z2), L^{z} represents a single bond or a divalent linking group.

Examples of the divalent linking group represented by L^{z} include -CO-, -O-, -S-, -SO-, -SO₂-, -NR^{N}-, divalent hydrocarbon groups (for example, an alkylene group, an alkenylene group, an arylene group, and the like), and groups obtained by combining them. R^{N} represents a hydrogen atom or a substituent. The substituent is preferably an alkyl group.

L^{z} is preferably a single bond or a divalent hydrocarbon group, more preferably a single bond or an alkylene group, and still more preferably a single bond.

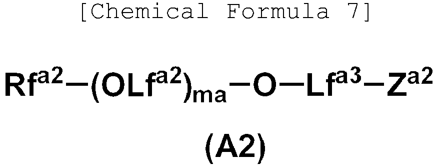

In the formula (A2), Rf^{a2} represents a perfluoroalkyl group. Lf^{a2} represents a perfluoroalkylene group. Lf^{a3} represents an alkylene group optionally having a fluorine atom. Z^{a2} represents a group represented by the formula (Z1) or a group having a repeating unit represented by the formula (Z2). ma represents a number of 2 or more.

Z^{a2} in the formula (A2) has the same definition as Z^{a1} in the formula (A1), and preferred examples thereof are also the same. ma in the formula (A2) has the same definition as mf in the formula (F), and preferred examples thereof are also the same.

The perfluoroalkyl group represented by Rf^{a2} is preferably a perfluoroalkyl group among the substituents represented by R^{a1}.

The perfluoroalkylene group represented by Lf^{a2} is preferably a perfluoroalkylene group represented by Rf in the formula (F).

The alkylene group optionally having a fluorine atom as represented by Lf^{a3} is preferably an alkylene group optionally having a fluorine atom as represented by any of L^{y2} to L^{y4} in the formula (Y2), more preferably an alkylene group having a fluorine atom, and still more preferably a perfluoroalkylene group.

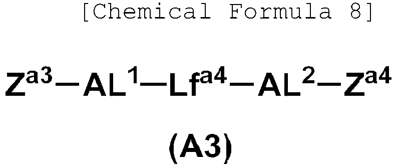

In the formula (A3), Z^{a3} and Z^{a4} each independently represent a group represented by the formula (Z1). AL¹ and AL² each independently represent an alkylene group optionally having -O-. L^{fa4} represents a perfluorooxyalkylene group.

Z^{a3} and Z^{a4} in the formula (A3) have the same definition as the group represented by the formula (Z1) in the formula (A1), and preferred examples thereof are also the same.

The alkylene group optionally having -O- as represented by either AL¹ or AL² may be linear, branched, or cyclic, and is preferably linear. The number of carbon atoms in the alkylene group is preferably 1 or more, and more preferably 2 or more. The upper limit thereof is preferably 1,000 or less, more preferably 500 or less, and still more preferably 10 or less.

The number of -O- that may be contained in the alkylene group is preferably 0 to 2, and more preferably 1.

The perfluorooxyalkylene group represented by L^{fa4} has the same definition as the perfluorooxyalkylene group that may be contained in the organosilicon compound A, and preferred examples thereof are also the same.

Examples of the organosilicon compound A include OPTOOL (registered trademark, manufactured by Daikin Industries, Ltd., for example, DSX and UF503), SHIN-ETSU SUBELYN KY-130 (manufactured by Shin-Etsu Chemical Co., Ltd.), and organosilicon compounds A synthesized by methods described in Synthesis Examples 1 and 2 of JP 2014 015609 A.

The number average molecular weight of the organosilicon compound A is preferably 2,000 or more, more preferably 4,000 or more, still more preferably 6,000 or more, and particularly preferably 7,000 or more. The upper limit thereof is preferably 40,000 or less, more preferably 20,000 or less, and still more preferably 15,000 or less.

The organosilicon compounds A may be used singly or in combination of two or more kinds thereof.

The content of the organosilicon compound A is preferably 1 to 100 mass%, more preferably 50 to 100 mass%, and still more preferably 80 to 100 mass%, with respect to the total solid content of the water-repellent layer-forming composition.

### -Organosilicon compound B-

The organosilicon compound B is a compound having no perfluorooxyalkylene group and no poly(perfluorooxyalkylene) chain but having a silicon atom.

The organosilicon compound B does not have a poly(perfluorooxyalkylene) chain. Specifically, the organosilicon compound B does not have the poly(perfluorooxyalkylene) chain that the organosilicon compound A has as described above.

The number of silicon atoms of the organosilicon compound B is 1 or more, preferably 1 to 100, more preferably 1 to 10, and still more preferably 1 to 3.

The organosilicon compound B preferably has a group represented by the formula (S) described above. The number of groups represented by the formula (S) that may be contained in the organosilicon compound B is preferably 1 to 20, more preferably 1 to 10, and still more preferably 1 to 3.

The organosilicon compound B preferably further has a perfluoroalkyl group.

Examples of the perfluoroalkyl group include the perfluoroalkyl group that the organosilicon compound A may have as described above.

The organosilicon compound B preferably contains at least one selected from the group consisting of a compound represented by the formula (B), a hydrolysate of the compound represented by the formula (B), and a hydrolysis condensate of the compound represented by the formula (B).

The hydrolysate and the hydrolysis condensate are as described above for the compound X.

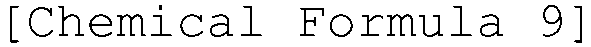

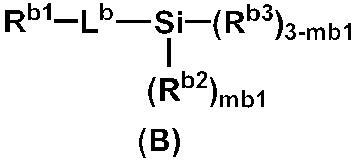

In the formula (B), R^{b1} represents an alkyl group having a fluorine atom. L^{b} represents a divalent linking group other than a perfluorooxyalkylene group and a poly (perfluorooxyalkylene) chain. R^{b2} represents a hydroxyl group or a hydrolyzable group. R^{b3} represents a hydrocarbon group. mb1 represents an integer of 1 to 3.

Note that R^{b2} in the formula (B) has the same definition as R^{x1} in the formula (X1), and preferred examples thereof are also the same. R^{b3} in the formula (B) has the same definition as R^{x2} in the formula (X1), and preferred examples thereof are also the same. mb1 in the formula (B) has the same definition as mx in the formula (X1), and preferred examples thereof are also the same.

In the formula (B), R^{b1} represents an alkyl group having a fluorine atom.

The alkyl group having a fluorine atom may be linear, branched, or cyclic, and is preferably linear. The number of carbon atoms in the alkyl group is preferably 1 to 30, and more preferably 1 to 10. The number of fluorine atoms of the alkyl group is preferably 1 to 30, and more preferably 5 to 20. The alkyl group having a fluorine atom is preferably a perfluoroalkyl group.

In the formula (B), L^{b} represents a divalent linking group other than a perfluorooxyalkylene group and a poly(perfluorooxyalkylene) chain.

Examples of the divalent linking group other than a perfluorooxyalkylene group and a poly(perfluorooxyalkylene) chain include, among the groups represented by L^{a1} in the formula (A1), divalent linking groups other than the perfluorooxyalkylene group and the poly(perfluorooxyalkylene) chain, and preferred is a divalent linking group that is a divalent linking group other than the perfluorooxyalkylene group and the poly(perfluorooxyalkylene) chain and has at least one selected from the group consisting of -O-, -CH₂-, and - CF₂-.

Examples of the organosilicon compound B include triethoxy-1H,1H,2H,2H-tridecafluoro-n-octylsilane (manufactured by Tokyo Chemical Industry Co., Ltd.), triethoxy(1H,1H,2H,2H-nonafluorohexyl)silane (manufactured by Tokyo Chemical Industry Co., Ltd.), and trimethoxy(1H,1H,2H,2H-nonafluorohexyl)silane (manufactured by Tokyo Chemical Industry Co., Ltd.).

The organosilicon compounds B may be used singly or in combination of two or more kinds thereof.

The content of the organosilicon compound B is preferably 1 to 100 mass%, more preferably 50 to 100 mass%, and still more preferably 80 to 100 mass%, with respect to the total solid content of the water-repellent layer-forming composition.

The water-repellent layer-forming composition preferably contains the organosilicon compound A and the organosilicon compound B.

The total content of the organosilicon compound A and the organosilicon compound B is preferably 50 to 100 mass%, more preferably 80 to 100 mass%, and still more preferably 95 to 100 mass%, with respect to the total solid content of the water-repellent layer-forming composition.

When the water-repellent layer (or the water-repellent layer-forming composition) contains the organosilicon compound A and the organosilicon compound B, the mass ratio of the content of the organosilicon compound B to the content of the organosilicon compound A (the content of the organosilicon compound B/the content of the organosilicon compound A) is preferably 0.05 or more, more preferably 0.08 or more, and still more preferably 0.10 or more. The upper limit thereof is preferably 2.0 or less, more preferably 1.0 or less, and still more preferably 0.6 or less.

### -Organic Solvent-

The water-repellent layer-forming composition may contain an organic solvent.

The organic solvent is preferably a fluorine-based organic solvent.

Examples of a fluorinated ether-based organic solvent include hydrofluoroethers such as fluoroalkyl (preferably, a perfluoroalkyl group having 2 to 6 carbon atoms)-alkyl ether, and ethyl nonafluorobutyl ether or ethyl nonafluoroisobutyl ether is preferable.

Examples of a fluorinated amine-based organic solvent include amines in which at least one of hydrogen atoms of ammonia is substituted with a fluoroalkyl group, and tertiary amines (for example, tris(heptafluoropropyl)amine, Fluorinert (registered trademark) FC-3283, manufactured by 3M) in which all hydrogen atoms of ammonia are substituted with fluoroalkyl groups (preferably, perfluoroalkyl groups) are preferable.

Examples of a fluorinated hydrocarbon-based organic solvent include fluorinated aliphatic hydrocarbon-based solvents such as 1,1,1,3,3-pentafluorobutane (for example, Solve 55, manufactured by Solvex Corporation), and fluorinated aromatic hydrocarbon-based solvents such as 1,3-bis(trifluoromethylbenzene).

Examples of the fluorine-based organic solvent include hydrochlorofluorocarbons such as ASAHIKLIN (registered trademark) AK225 (manufactured by AGC Inc.) and hydrofluorocarbons such as ASAHIKLIN (registered trademark) AC2000 (manufactured by AGC Inc.).

The organic solvents may be used singly or in combination of two or more kinds thereof.

### -Additive-

The water-repellent layer-forming composition may contain an additive.

Examples of the additive include a silanol condensation catalyst, an antioxidant, a rust inhibitor, an ultraviolet absorber, a light stabilizer, an antifungal agent, an antibacterial agent, a biofouling inhibitor, a deodorant, a pigment, a flame retardant, and an antistatic agent.

### <Primer Layer>

The laminate may include a primer layer.

The primer layer is preferably disposed between the substrate and a hard coat layer. In this case, the adhesion between the substrate and the hard coat layer is easily improved, and the impact resistance of the laminate can be improved.

The primer layer preferably contains a resin. The resin may be in the form of particles.

Examples of the resin include urethane resins, epoxy resins, phenol resins, polyimides, polyesters, bismaleimide resins, and polyolefins, and urethane resins are preferable.

The primer layer may contain an additive such as a surfactant.

Examples of a method for forming the primer layer include a method in which a primer layer-forming composition containing a resin is applied onto a desired member to form a coating film, and the coating film is subjected to a curing treatment (for example, drying treatment) as necessary to form the primer layer. In other words, the primer layer is preferably a layer obtained by applying the primer layer-forming composition onto a desired member to form a coating film, and subjecting the coating film to a curing treatment.

Examples of a method for applying the primer layer-forming composition include application of the intermediate layer-forming composition described above.

The thickness of the primer layer is preferably 0.3 to 2.0 µm.

### <Hard Coat Layer>

The laminate may include a hard coat layer.

The hard coat layer is preferably disposed on the primer layer, and more preferably disposed between the primer layer and the antireflection layer. When the laminate includes the hard coat layer, the scratch resistance of the laminate can be improved.

The hard coat layer preferably exhibits a hardness of H or higher hardness in terms of pencil hardness according to JIS K5600.

Examples of a method for forming the hard coat layer include a method in which a hard coat layer-forming composition containing an inorganic compound is applied onto a desired member to form a coating film, and the coating film is subjected to a curing treatment (for example, light irradiation treatment and drying treatment) as necessary to form the hard coat layer. In other words, the hard coat layer is preferably a layer obtained by applying the hard coat layer-forming composition onto a desired member to form a coating film, and subjecting the coating film to a curing treatment.

Examples of a method for applying the hard coat layer-forming composition onto a substrate include application of the intermediate layer-forming composition described above.

As conditions for the light irradiation treatment, suitable conditions can be selected depending on the type of a polymerization initiator to be used.

Examples of the type of light in light irradiation include ultraviolet rays and visible rays. Examples of a light source include a high-pressure mercury lamp.

An integrated light amount during light irradiation is preferably 100 to 10,000 mJ/cm², and more preferably 100 to 5,000 mJ/cm² from the viewpoint of productivity and the curability of the coating film.

The thickness of the hard coat layer is preferably 1 to 20 µm, and more preferably 2 to 18 µm.

The hard coat layer-forming composition may contain an inorganic compound.

The inorganic compound is an inorganic compound selected from the group consisting of an inorganic oxide and silsesquioxane. In the present description, silsesquioxane is not included in the inorganic oxide.

The inorganic oxide is preferably metal oxide particles.

Examples of the metal oxide particles include oxide particles of one or more metals selected from the group consisting of Ti, Zr, Si, Al, Sn, Sb, Ta, Ce, La, Fe, Zn, W, and In, and composite metal oxide particles thereof. The composite metal oxide particles are oxide particles containing two or more metals (metal atoms).

The inorganic oxide particles preferably contain one or more selected from the group consisting of SiO₂ (silicon oxide), Al₂O₃ (aluminum oxide), SnO₂ (tin oxide), ZrO₂ (zirconium oxide), and TiO₂ (titanium oxide), more preferably contain one or more selected from the group consisting of SiO₂ and ZrO₂, and still more preferably contain SiO₂.

As the inorganic oxide particles, commercially available products may be used. Examples of the commercially available inorganic oxide particles include a sol in which one or more kinds of inorganic oxide particles selected from the group consisting of SiO₂, Al₂O₃, SnO₂, ZrO₂, TiO₂, and composite oxide particles thereof are dispersed in water or an organic solvent.

Silsesquioxane is a silane compound having a basic skeleton represented by the formula (Q), as obtained by hydrolyzing a trifunctional silane compound such as alkoxysilane, chlorosilane, or silanol.

Examples of the structure of silsesquioxane include an irregular form such as a random structure, a ladder structure, a cage type (completely condensed cage type) structure, and an incomplete cage type structure (a partially cleaved structure of the cage type structure, where a part of silicon atoms lacks in the cage type structure and a silicon-oxygen bond is cleaved in a part of the cage type structure).

R^{Q}-SiO_{3/2} (Q)

In the formula (Q), R^{Q} represents a monovalent organic group.

Examples of silsesquioxane include SQ series (for example, AC-SQ series and MAC-SQ series, manufactured by Toagosei Co., Ltd.).

The inorganic compound may be surface-treated.

Examples of the surface treatment include introduction of various functional groups and a treatment using a known surface modifier. Examples of functional groups to be introduced into the surface of the inorganic compound include a polymerizable group, and a (meth)acrylate group is preferable. The inorganic compound having a (meth)acrylate group on the surface is preferable from the viewpoint of easily reacting with second resin particles that are contained in a second composition.

The average particle size of the inorganic compound is preferably 0.5 to 200 nm, and more preferably 1 to 50 nm.

The inorganic compounds may be used singly or in combination of two or more kinds thereof.

When the hard coat layer-forming composition contains the inorganic compound, the content of the inorganic compound is preferably 10.0 to 99.0 mass%, more preferably 50.0 to 95.0 mass%, and still more preferably 80.0 to 95.0 mass%, with respect to the total solid content of the hard coat layer-forming composition.

### <Method for Producing Laminate>

Examples of a method for producing the laminate of the present embodiment include known production methods.

Specific examples thereof include a method for producing a laminate including the step of forming an antireflection layer on at least one surface side of a substrate, the step of applying an intermediate layer-forming composition onto the antireflection layer and curing the obtained coating film to form an intermediate layer, and the step of applying a water-repellent layer-forming composition onto the intermediate layer and curing the obtained coating film to form a water-repellent layer.

The method for forming each layer is as described above.

### <Applications of Laminate>

The laminate can be applied to various applications.

When a lens substrate is used as the substrate, the laminate is suitably used as a spectacle lens.

Other exemplary applications of the laminate include a front plate (window film) in a flexible display device.

The flexible display device is preferably composed of a laminate for a flexible display device and an organic electroluminescence display panel, where the laminate for a flexible display device is disposed on the visible side with respect to the organic electroluminescence display panel, and is configured to be foldable.

The laminate for a flexible display device may further include a polarizing plate (preferably, a circularly polarizing plate) and a touch sensor. In the laminate for a flexible display device, it is preferable that the laminate (window film), the polarizing plate, and the touch sensor are laminated in this order from the viewing side, and that the laminate (window film), the touch sensor, and the polarizing plate are laminated in this order from the viewing side. The polarizing plate is preferably disposed closer to the viewing side than the touch sensor is, because in this case the pattern of the touch sensor is less visually recognizable and the visibility of a display image is improved. The members can be laminated by using an adhesive, a pressure-sensitive adhesive, or the like.

### [Spectacle Lens]

The spectacle lens is a lens including the laminate described above, in which the substrate included in the laminate is a lens substrate.

Respective members constituting the spectacle lens are as described above.

### EXAMPLES

Hereinafter, the present disclosure will be described in more detail with reference to examples, but the present disclosure is not limited by these examples at all.

### [Example 1]

A laminate of Example 1 was produced by the following procedure.

### <Formation of Intermediate Layer>

Butyl acetate (440 parts by mass), X12-5263HP (1.99 parts by mass, manufactured by Shin-Etsu Chemical Co., Ltd.), and KBM-603 (0.18 parts by mass, manufactured by Shin-Etsu Chemical Co., Ltd.) were mixed to prepare an intermediate layer-forming composition.

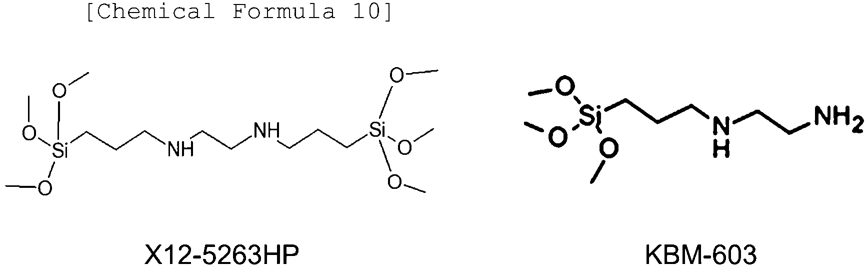

Subsequently, an intermediate layer was formed using the intermediate layer-forming composition.

As a substrate having an antireflection layer, a lens substrate (S-4.00, manufactured by AKCORP., having an antireflection layer on each surface of the substrate) having a refractive index of 1.60 was used. Using a dip coater (ACA-001A-78A, manufactured by SPC ELECTRONICS CORPORATION), the intermediate layer-forming composition was applied onto the substrate having the antireflection layers under the conditions of a liquid immersion time of 3 seconds and a pulling-up speed of 6.0 mm/sec. After the application, the substrate was allowed to stand in air (room temperature: 25°C, relative humidity: 50%RH) for several minutes to form an intermediate layer on the surface of each antireflection layer, thereby obtaining the substrate with the antireflection layers and the intermediate layers. The substrate with the antireflection layers and the intermediate layers includes the intermediate layer, the antireflection layer, the substrate, the antireflection layer, and the intermediate layer in this order.

### <Formation of Water-Repellent Layer>

ASAHIKLIN AC-2000 (876.34 parts by mass, manufactured by AGC Inc.) as an organic solvent and OPTOOL DSX (5.96 parts by mass, solid content concentration: 20 mass%, manufactured by Daikin Industries, Ltd.) were mixed to prepare a water-repellent layer forming composition.

Subsequently, a water-repellent layer was formed using the water-repellent layer forming composition.

Using a dip coater (ACA-001A-78A, manufactured by SPC ELECTRONICS CORPORATION), the water-repellent layer forming composition was applied onto the substrate with the antireflection layers and the intermediate layers under the conditions of a liquid immersion time of 3 seconds and a pulling-up speed of 3.5 mm/sec. After the application, the obtained substrate was heat-treated in an oven at 50°C for 20 minutes. In the heat treatment, no humidity adjustment treatment was performed. After the heat treatment, the substrate was further subjected to wet heat curing for 30 minutes under the conditions of 50°C and a relative humidity of 80%RH to form water-repellent layers, thereby producing a laminate of Example 1. The laminate includes the water-repellent layer, the intermediate layer, the antireflection layer, the substrate, the antireflection layer, the intermediate layer, and the water-repellent layer in this order.

### [Examples and Comparative Examples other than Example 1]

Each laminate was produced in the same manner as in Example 1, except that components and their contents were adjusted to those shown in the following Table.

### [Evaluation]

### <Scratch Resistance>

The scratch resistance of each laminate was evaluated by the following procedure.

First, the visible light transmittance of the laminate was measured with a spectrophotometer (U-4100, manufactured by Hitachi High-Tech Science Corporation), and converted based on the definition of a 2-degree visual field (light source: C light source) of JIS Z8701 to obtain a luminous transmittance YA (%).

Next, a rubber sheet of 8 mm × 120 mm and an abrasive-containing plastic sheet having the same size were stacked in this order and fixed on a flat portion of a pressing portion having a metal flat portion. The pressing portion was set such that the abrasive-containing plastic sheet fixed to the pressing portion was in contact with the surface of the laminate on the water-repellent layer side. At this time, the abrasive-containing plastic sheet and the laminate were adjusted so as to be parallel to each other.

After the above adjustment, a load of 1 kg was applied to the pressing portion, and the abrasive-containing plastic sheet and the rubber sheet were reciprocated in a linear direction at a speed of 100 times/67 seconds in a state where the laminate was fixed. The reciprocating motion was performed 100 times such that a relative moving distance between the laminate and the abrasive-containing plastic sheet was 30 mm.

After the reciprocating motion, only the laminate was rotated counterclockwise by 45° to reposition the laminate, and the abrasive-containing plastic sheet and the rubber sheet were reciprocated under the same conditions as above. Further, the laminate was rotated and repositioned and the reciprocating motion was performed; this operation was performed two more times, thus having 400 reciprocations in total.

The luminous transmittance YB (%) of the laminate after the above reciprocating motion was obtained in the same manner as that for the luminous transmittance YA.

The scratch resistance was evaluated based on the "value of YA - YB (Y value difference, %)" obtained by the above procedure. The smaller the Y value difference, the more excellent the scratch resistance of the laminate. Based on the Y value difference, the scratch resistance was evaluated according to the following evaluation criteria. In the cases of rating A, the peeling of the antireflection layer of the laminate was not seen, in the cases of rating B and rating C, the peeling of a part of the antireflection layer of the laminate was seen, and the degree of peeling was larger in the cases of rating C than that in the cases of rating B.
"A": Y value difference of 0.4% or less
"B": Y value difference of more than 0.4% and 1.0% or less
"C": Y value difference of more than 1.0%

### <Appearance Characteristics>

The presence or absence of a defect such as a condensate in each laminate was visually observed under a fluorescent lamp.
"A": No condensate or the like was observed.
"B": A condensate or the like was observed.

### <Initial Water Contact Angle>

A water droplet of 2 µL was dropped onto the surface of one of the water-repellent layers of each laminate, the contact angle of water with a liquid amount of 2 µL was measured by a θ/2 method using a contact angle measuring device (DM700, manufactured by Kyowa Interface Science Co., Ltd.), and the obtained water contact angle was defined as an initial water contact angle. Evaluation was performed according to the following evaluation criteria.
"A": initial water contact angle of 110° or more
"B": initial water contact angle of less than 110°

### <Water Contact Angle after Abrasion Test>

On the surface of one of the water-repellent layers of the laminate, 16 stacked sheets of Kimwipe Wiper S-200 (manufactured by Nippon Paper Crecia Co., Ltd.) was attached to a 15 mm × 15 mm square elastic body (acrylic plate having a thickness of 1 mm), a load of 200 g was applied thereto, and an abrasion test was performed 20,000 times with a 30 mm stroke and 70r/min (70 reciprocations per one minute). The water contact angle (paper durability) after the abrasion test was measured at the substantially central part of an abraded part of the water-repellent layer of the laminate having undergone the abrasion test in the same manner as that for the initial water contact angle described above. Evaluation was performed according to the following evaluation criteria.
"A": Water contact angle after abrasion test of 110° or more
"B": Water contact angle after abrasion test of less than 110°

In Table, the content of the compound X and the content of the compound Y (mass%) are values based on the total mass of the intermediate layer-forming composition.

The column of "X/(X+Y) (mass%)" shows the content (mass%) of the compound X with respect to the total content of the compound X and the compound Y. In other words, the value of "X/(X+Y) (mass%)" also corresponds to the content (mass%) of the compound X with respect to the total solid content of the intermediate layer-forming composition.

The content (mass%) of the organosilicon compound is a value based on the total mass of the water-repellent layer-forming composition. The content of the organosilicon compound with respect to the total solid content of the water-repellent layer-forming composition is 100 mass% in all Examples.

Numerical values in parentheses in the columns of the scratch resistance, the initial water contact angle, and the water contact angle after the abrasion test represent values obtained in the respective evaluations.

**[Table 1]**

| | Intermediate layer-forming composition | | | | | Intermediate layer | Water-repellent layer-forming composition | | | Water-repellent layer | Results | | | |
|---|---|---|---|---|---|---|---|---|---|---|---|---|---|---|
| | | | | | | | | | | | Scratch resistance | Appearance characteristics | Initial water contact angle (°) | Water contact angle after abrasion test (°) |
| | Compound X | Compound Y | Content (mass%) | | X/(X + Y) (mass%) | Thickness (nm) | Organosilicon compound | Content (mass%) | Solvent | Thickness (nm) | | | | |
| | | | Compound X | Compound Y | | | | | | | | | | |
| Example 1 | KBM-603 | X12-5263HP | 0.04 | 0.45 | 8.2 | 13 | DSX | 0.135 | AC-2000 | 1 | B (0.5) | A | A (120) | A (110) |
| Example 2 | KBM-603 | X12-5263HP | 0.20 | 0.25 | 44.4 | 13 | KY130 | 0.135 | AC-2000 | 1 | A (0.2) | A | A (113) | A (112) |
| Example 3 | KBM-603 | X12-5263HP | 0.20 | 0.25 | 44.4 | 13 | DSX | 0.135 | AC-2000 | 1 | A (-0.1) | A | A (120) | A (113) |
| Example 4 | KBM-903 | X12-5263HP | 0.19 | 0.40 | 32.2 | 12 | KY130 | 0.135 | AC-2000 | 1 | A (0.3) | A | A (113) | A (111) |
| Example 5 | KBM-903 | X12-5263HP | 0.19 | 0.40 | 32.2 | 12 | DSX | 0.135 | AC-2000 | 1 | A (0.4) | A | A (120) | A (119) |
| Example 6 | KBM-903 | X12-5263HP | 0.45 | 0.25 | 64.3 | 14 | KY130 | 0.135 | AC-2000 | 1 | A (0.4) | A | A (114) | A (113) |
| Example 7 | KBM-903 | X12-5263HP | 0.45 | 0.25 | 64.3 | 14 | DSX | 0.135 | AC-2000 | 1 | A (0.0) | A | A (120) | A (119) |
| Example 8 | KBM-903 | X12-5263HP | 0.70 | 0.10 | 87.5 | 17 | KY130 | 0.135 | AC-2000 | 1 | A (0.2) | A | A (113) | A (112) |
| Example 9 | KBM-903 | X12-5263HP | 0.70 | 0.10 | 87.5 | 17 | DSX | 0.135 | AC-2000 | 1 | A (-0.7) | A | A (120) | A (118) |
| Example 10 | KBM-603 | X12-5263HP | 0.04 | 0.45 | 8.2 | 13 | KY130 | 0.135 | AC-2000 | 1 | B (0.9) | A | A (113) | A (112) |
| Comparative Example 1 | - | X12-5263HP | - | 0.50 | - | 13 | KY130 | 0.135 | AC-2000 | 1 | C (1.4) | A | A (113) | A (114) |
| or Comparative Example 2 | - | X12-5263HP | - | 0.50 | - | 14 | DSX | 0.135 | AC-2000 | 1 | C (1.9) | A | A (120) | B (103) |
| Comparative Example 3 | KBM-903 | - | 0.9 | - | - | 16 | KY130 | 0.135 | AC-2000 | 1 | A (-1.3) | B | A (112) | A (111) |
| Comparative Example 4 | KBM-903 | - | 0.9 | - | - | 16 | DSX | 0.135 | AC-2000 | 1 | A (-1.6) | B | A (119) | A (117) |

- KBM-603 (the compound described above, manufactured by Shin-Etsu Chemical Co., Ltd.)
- KBM-903 (manufactured by Shin-Etsu Chemical Co., Ltd.)

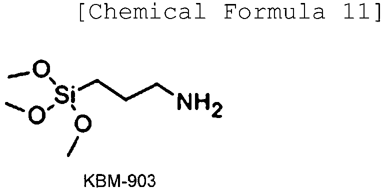

- X12-5263HP (the compound described above, manufactured by Shin-Etsu Chemical Co., Ltd.)
- DSX: OPTOOL DSX (organosilicon compound A, solid content concentration: 20 mass%, manufactured by Daikin Industries, Ltd.)
- KY130: SHIN-ETSU SUBELYN KY-130 (organosilicon compound A, solid content concentration: 20 mass%, manufactured by Shin-Etsu Chemical Co., Ltd.)
- AC-2000: ASAHIKLIN AC-2000 (manufactured by AGC Inc.)

From the evaluation results, it was confirmed that the laminate of the present disclosure is excellent in both scratch resistance and appearance characteristics.

From the comparison of Examples 1 to 10, it was confirmed that when the content of the compound X is 32.0 to 88.0% with respect to the total content of the compound X and the compound Y, the scratch resistance is more excellent.

## Claims

1. A laminate comprising a substrate, an antireflection layer, an intermediate layer, and a water-repellent layer in this order,
wherein
the intermediate layer is a layer formed using an intermediate layer-forming composition, and
the intermediate layer-forming composition contains:
at least one compound X selected from the group consisting of a compound represented by formula (X1), a hydrolysate of the compound represented by the formula (X1), and a hydrolysis condensate of the compound represented by the formula (X1); and
a compound Y which is a compound different from the compound X, has at least one of an amino group or an amine skeleton, and has a silicon atom, 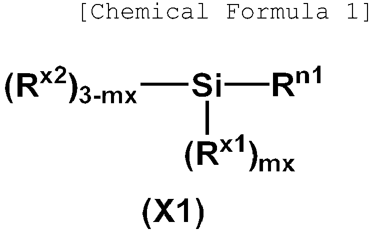
where Rⁿ¹ represents an alkyl group having an amino group and optionally having -NH-, R^{x1} represents a hydroxyl group or a hydrolyzable group, R^{x2} represents a hydrocarbon group, and mx represents an integer of 1 to 3.

2. The laminate according to claim 1, wherein a content of the compound X in the intermediate layer-forming composition is 32.0 to 88.0 mass% with respect to a total content of the compound X and the compound Y.

3. The laminate according to claim 1 or 2, wherein the compound Y contains at least one selected from the group consisting of a compound represented by formula (Y1), a hydrolysate of the compound represented by the formula (Y1), and a hydrolysis condensate of the compound represented by the formula (Y1), 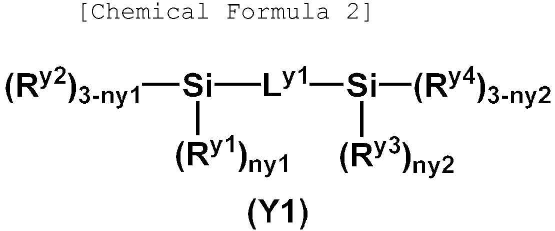 where R^{y1} and R^{y3} each independently represent a hydroxyl group or a hydrolyzable group, R^{y2} and R^{y4} each independently represent a hydrocarbon group, ny1 and ny2 each independently represent an integer of 1 to 3, L^{y1} represents a divalent linking group having at least -NR^{L1}-, where the divalent linking group further optionally has a group selected from the group consisting of -NR^{L1}-, - C(R^{L2})(R^{L3})-, and -Si(R^{L4})(R^{L5})-, R^{L1} represents a hydrogen atom or an alkyl group, and R^{L2} to R^{L5} each independently represent a hydrogen atom, a fluorine atom, or an alkyl group optionally having a fluorine atom.

4. A spectacle lens comprising the laminate according to any one of claims 1 to 3, wherein the substrate of the laminate is a lens substrate.
